# EUROPEAN PATENT SPECIFICATION

(11) **EP 1 068 065 B1**
(45) Date of publication and mention of the grant of the patent: **16.07.2003**
(21) Application number: 99910520.8
(22) Date of filing: 17.03.1999
(51) Int. Cl.: B29C 69/00, B65D 50/04

(54) **MOULDING METHOD AND CONTAINER CAP**
FORMVERFAHREN UND BEHÄLTERVERSCHLUSS
PROCEDE DE MOULAGE ET BOUCHON DE RECIPIENT

(30) Priority: 31.03.1998 GB 9806911
(43) Date of publication of application: 17.01.2001
(73) Proprietor: Lawson Mardon Packaging UK Ltd., Bristol BS30 8XP (GB)
(72) Inventor: Lawson Mardon Packaging UK Ltd., Bristol BS30 8XP (GB)
(74) Representative: Baker, Colin John
(86) International application number: GB9900824
(87) International publication number: WO99050050

(56) References cited:
- CH-A- 484 789
- FR-A- 2 329 533
- FR-A- 2 613 277
- GB-A- 926 480
- US-A- 3 722 727
- US-A- 4 037 747
- PYE R: "ASSEMBLING PARTS IN THE MOLD" MODERN PLASTICS, vol. 47, no. 7, July 1970, pages 90-92, 94, XP002052171

## Description

This invention relates to a child resistant container cap assembly and to a method of moulding the assembly.

GB-A-1560583 discloses a cap assembly. A cap is moulded along with a sleeve, with frangible means between the cap and the sleeve. The cap is then forced into the sleeve with breaking of the frangible means, so that they are rotatably interengaged. Ratchet formations together permit rotation of the sleeve relative to the cap in the unscrewing direction, but permit rotation of the cap together with the sleeve in the screw-down direction.

The end of the sleeve remote from the top of the cap has opposite portions spaced away from the cap skirt. These portions can be squeezed together to bring formations on the sleeve into engagement with formations on the skirt, to permit unscrewing of the cap by twisting the sleeve.

This arrangement suffers from several disadvantages. The loose fitting of the sleeve on the cap skirt means that the reliability of the ratchet is uncertain. Squeezing of the sleeve causes deformation of the whole sleeve, bringing the ratchet teeth out of engagement and weakening the sleeve. Alternatively, the sleeve would have to be so robustly made that it would be difficult, if not impossible, to deform the sleeve sufficiently to effect removal of the cap.

In addition, it would be difficult to connect the two moulded parts together. The frangible connecting means between the two parts has to be quite strong, since otherwise breakage would occur as the moulding is stripped from the mould. The assembly is unscrewed from the mould core, so the connecting means has to withstand such unscrewing. Any partial breakage would result in tilting of the cap relative to the sleeve, making it impossible to assemble the parts and leading to stoppage of any automatic procedure.

The two parts will also shrink to different degrees and the differential shrinkage will result in a poor fit of the two parts leading to unreliability.

The precharacterising part of Claim 1 is based on this disclosure.

The invention provides a moulded child-resistant container cap assembly, having a cap with a skirt rotatably engaged in a sleeve, the skirt and the sleeve having ratchet formations permitting rotation of the cap with the sleeve in a securing direction for securing the cap on a container, but allowing the sleeve to ride over the skirt in the reverse rotational direction, squeezable actuable means being provided to permit rotation of the cap with the sleeve in said reverse rotational direction when desired,
characterised in that a portion of the sleeve defines a tab, delineated by a gap in the sleeve and carrying a ratchet tooth, the tab resiliently biasing the tooth into a position where it is engageable with a formation on the skirt.

This arrangement permits easy simultaneous moulding of the parts, and assembly of the parts by stripping the parts from the mould core. A method of this type is disclosed in "Assembling parts in the molds" by R. Pye in Modern Plastics, Vol 47, No. 7, July 1970, pps 90-92 and 94. The invention also relates to applying such a method to manufacture of the cap assembly, the method being claimed in Claim 6.

The two parts can have a close fit with secure interengagement of the ratchet formations. The ratchet tooth (or teeth) on the sleeve is effectively sprung into engagement with the formation of the skirt, while the rest of the sleeve can be closely fitted on the skirt.

It is preferred that the squeezable actuable means comprises opposite members, each defined by a portion of the sleeve and delineated by a gap in the sleeve, each member being resiliently biased out of engagement with a corresponding formation on the skirt, but engageable with the formation on squeezing of the members towards each other.

This arrangement also permits close fitting of the sleeve on the skirt, with each member effectively sprung out of the engagement position. The members are easy to see and to squeeze towards each other to effect unscrewing of the cap assembly, without deformation of the sleeve as a whole taking place.

Reference is made to the accompanying drawings, wherein:-
Fig 1 is a sectional view of a cap in the as-moulded state, prior to being stripped from a mould core;
Fig 2 is a side elevation of the cap in the same state as in Fig 1;
Fig 3 is a sectional view similar to Fig 1, showing the cap in its final state, as stripped from the mould;

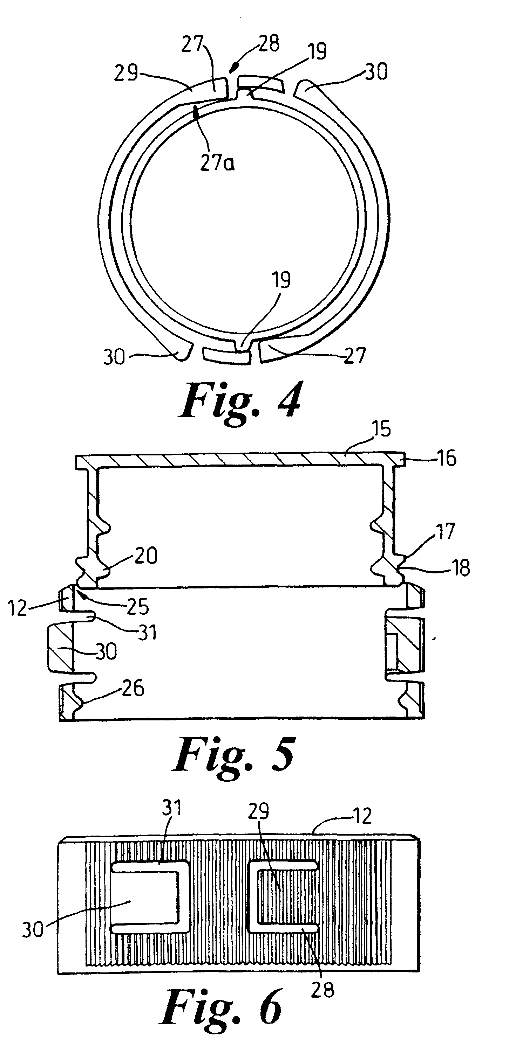

Fig 4 is a plan view of the cap in the final state;
Fig 5 is a sectional view across a different diameter of the cap from Fig 1;
Fig 6 is a side elevation of the cap in the final state;
Fig 7 is a diagrammatic view of a mould, which is partially open and shows a moulded cap as in Fig 1;

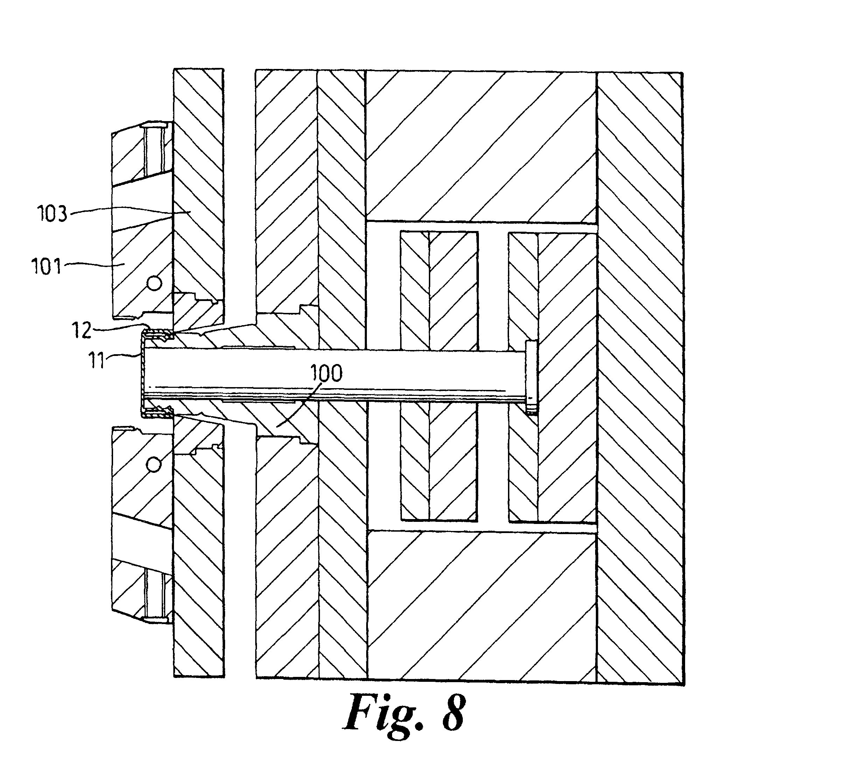

Fig 8 is a view similar to Fig 7, showing a stripper having moved to cause interengagement of the parts of the cap, as in Fig 3,
Fig 9 is a view similar to Fig 8, with the cap stripped from the mould;
Fig 10 is a sectional view, similar to Fig 1, of an alternative embodiment of the invention;
Fig 11 is a sectional view, similar to Fig 3, of the alternative embodiment;
Fig 12 is a side elevation of the alternative embodiment, similar to Fig 2; and
Figs 13A and 13B are views similar to Fig 4 of the alternative embodiment; Fig 13A shows the cap in a state in which the cap cannot be unscrewed from a container, whereas Fig 13B shows the cap in its state permitting unscrewing.

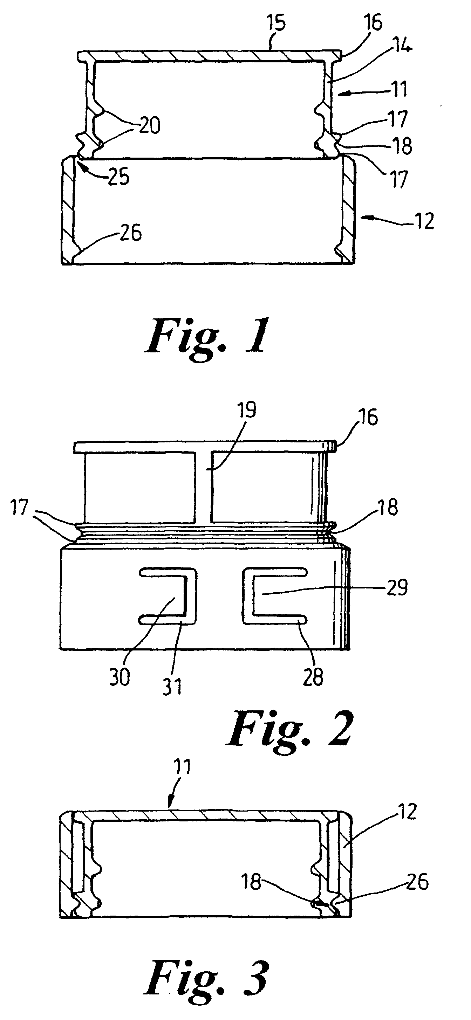

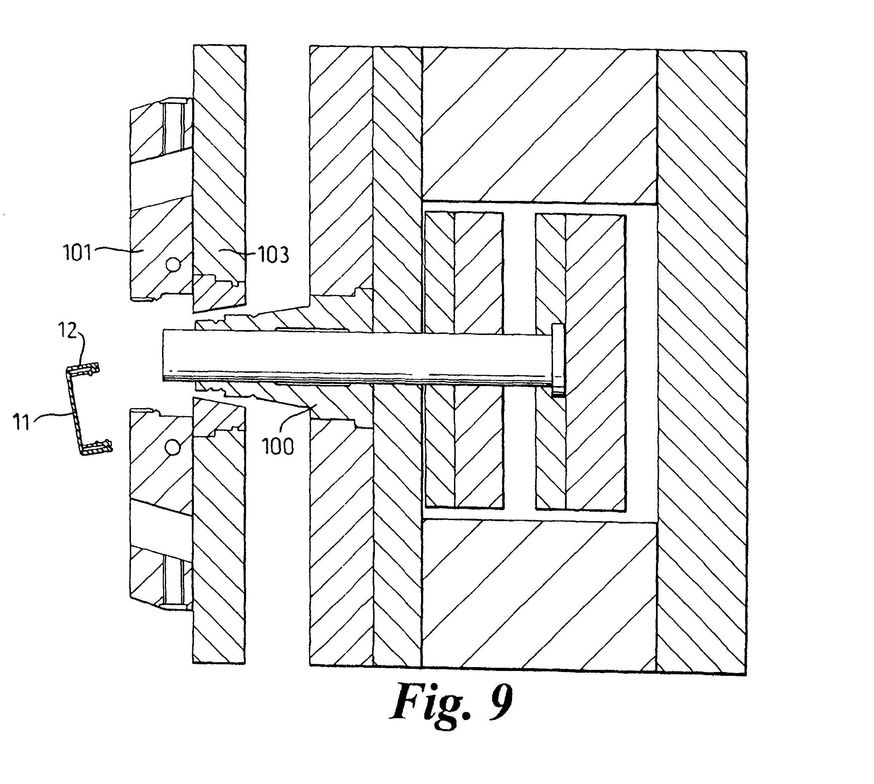

Referring to Figs 1 and 9, the cap is injection moulded, prior to being stripped from a mould core, with interconnected, axially aligned portions 11,12. One portion defines a main cap portion 11 and the other portion defines a sleeve 12, whose inner diameter is slightly greater than the external diameter of the main cap portion.

The main cap portion 11 has a sleeve portion, or skirt 14 and a closure top 15. The top forms an annular flange 16 and the opposite end part of the skirt 14 has a pair of external, annular flanges 17, defining an annular groove 18 therebetween. Axially extending, circumferentially spaced ribs 19 are formed externally between the top flange 16 and the pair of flanges 17.

The main cap portion also has an internal screw thread 20 for screwing the cap onto a bottle, or other container.

The sleeve 12 is joined to the skirt 14, at the pair of flanges 17, by frangible tags 25 at angularly spaced intervals around the sleeve. The opposite end of the sleeve 12 has an inwardly extending, annular flange 26. The sleeve 12 has a rectangular portion separated from the body of the sleeve, except at one end, by a gap 28 defining a tab 29. The tab carries a ratchet tooth 27 projecting inwardly of the sleeve. A further such tab 29 is provided diametrally opposite to the first mentioned tab. Each tab 29 is effectively a spring.

The main cap portion 11 can be pushed into the sleeve 12 with fracturing of the tags 25, so that the annular flange 26 on the sleeve 12 snaps into the groove 18 on the skirt, to secure the main cap portion rotationally within the sleeve. The ratchet teeth 27 engage with ribs 19 on the skirt 14 to limit relative rotation in one angular direction, but the teeth have ramp surfaces 27a, which ride over the ribs 19 to permit rotation in the opposite angular direction. The cap can, therefore, be screwed onto a container, but reverse rotation, to unscrew the cap, causes rotation of the sleeve on the main cap portion.

The sleeve 12 also has a pair of diametrally opposite members, or buttons 30, each delineated by a gap 31 in the sleeve wall. Each button 30 is of rectangular form and is effectively hinged to the main wall of the sleeve at one end. The buttons 30 can be manually squeezed to cause them to project inwardly of the sleeve, so that they can engage with respective ribs 19. This permits the main cap portion to rotate with the sleeve, for unscrewing of the cap.

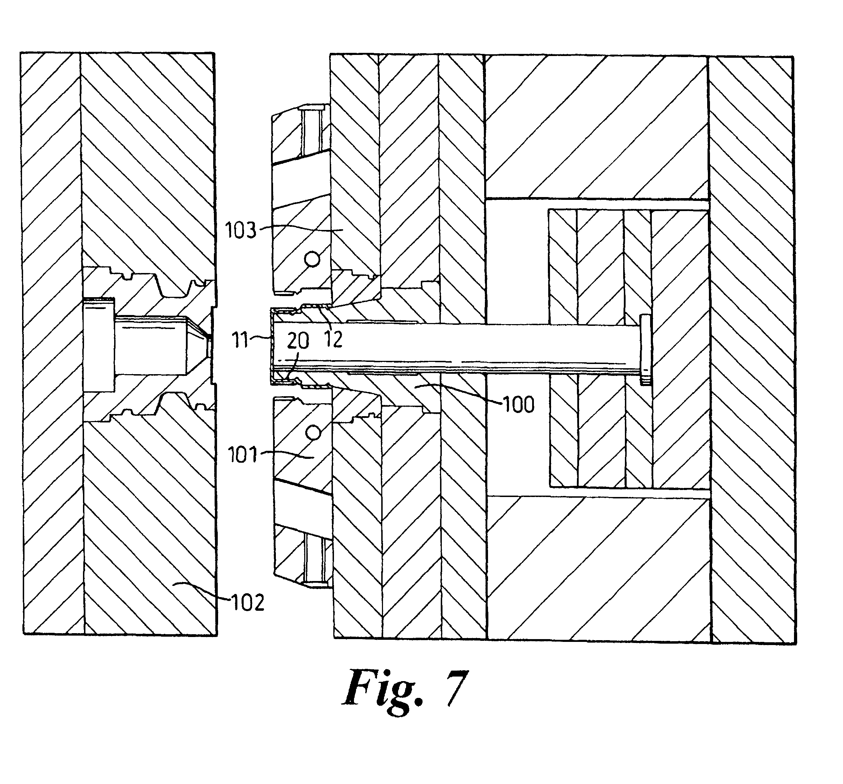

Referring now to Fig 5, a cap, as described above, is shown after being moulded in a mould having a retractable slide part 101, shown partially retracted, and an injection end part, also shown partially retracted. The cap with aligned portions 11,12 is shown on the core 100. The screw thread 20, formed on the main cap portion 11, seats in a groove in the core and provides resistance to stripping of the cap from the mould. A stripper 103 contacts the end of the sleeve 12, opposite to the main cap portion 11.

The stripper 103 is movable axially of the core 100 to strip the cap off the core. Such movement initially causes the sleeve 12 to slide over the skirt 14 of the main cap portion, with fracturing of the tags 25, until the annular flange 26 snaps into the groove 18 to join the parts together. This position is illustrated in Fig 6.

Continued movement of the stripper 103, overcomes the resistance of the screw thread 20 and strips the assembled cap from the mould, as shown in Fig 7.

The cap can be easily manufactured in one piece in a single moulding operation and the parts 11,12 are automatically, rotationally assembled together by the process of stripping the cap from the mould. The resultant cap is child resistant, but not difficult to unscrew from a container, only squeezing of the buttons 30, being required during the unscrewing operation.

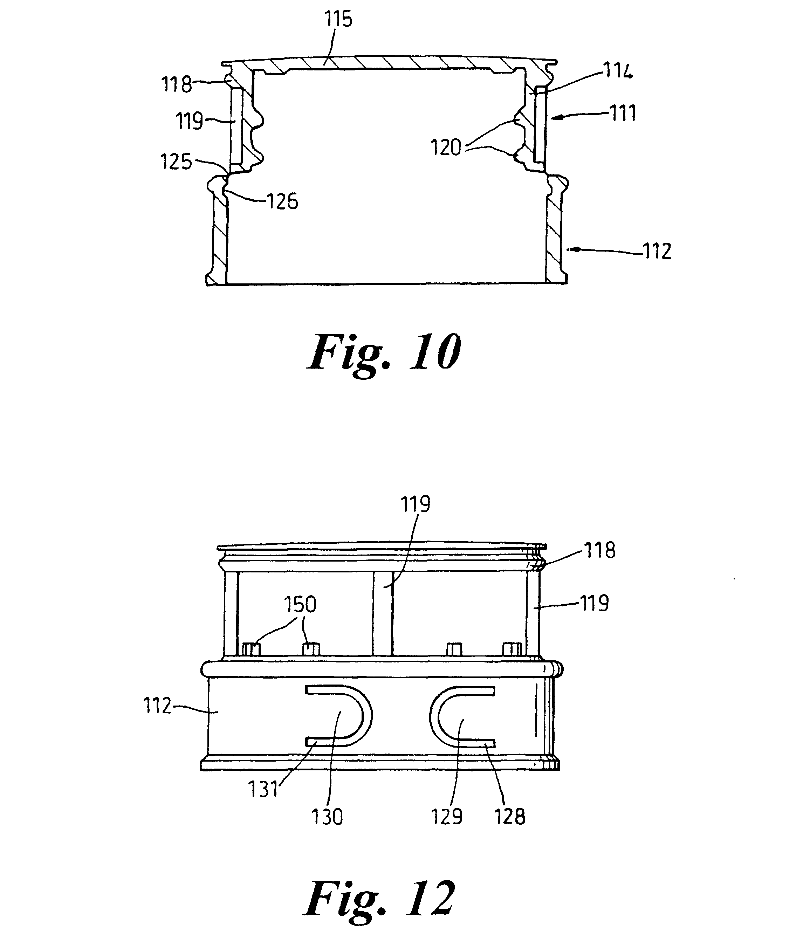

Reference is now made to Figs 10 to 13B, which show an alternative embodiment. Fig 10 is equivalent to Fig 1 and shows the cap in the as-moulded state, prior to being stripped from the mould core.

The main cap portion 111 has a skirt 114 with an internal screw thread 120, but the skirt is provided near the closure top 115 with an external, annular flange 118, instead of the annular groove 18 of Fig 1.

The sleeve 112 is provided with an internal groove 126 near the top of the sleeve, adjacent the main cap portion 111, instead of with an internal flange 26, as in Fig 1.

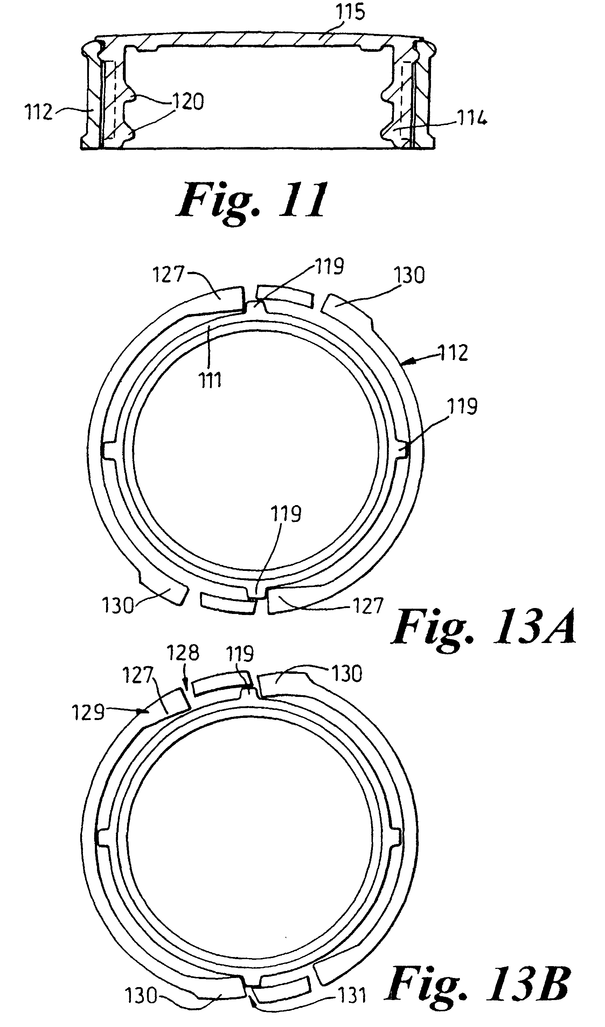

When the moulding is stripped from the mould, tags 125 are fractured and the annular flange 118 on the main cap portion snaps into the groove 126 on the sleeve, to secure the main cap portion rotationally within the sleeve, as shown in Fig 11.

The skirt 114 has circumferentially spaced axial ribs 119 for engagement in use with diametrally opposite ratchet teeth 127 on sprung tabs 129 delineated from the body of the sleeve 112 by gaps 128. The ratchet teeth are shown in Figs 13A and 13B and one of the tabs is shown in Fig 12.

As shown in Fig 12, the sleeve also has diametrally opposite sprung buttons 130, each delineated by a gap 131. These are similar to the buttons of the first embodiment, but have a curved edge instead of the rectangular formation shown in Fig 2.

As shown in Fig 13A, if the sleeve 112 is gripped and turned clockwise, the ratchet teeth 127 engage the ribs 119 to turn the main cap portion 111 clockwise, which is the screw-down direction. Anti-clockwise movement of the sleeve is about the main cap portion, which remains stationary, with the teeth 127 riding over the ribs.

If, however, the buttons 130 are squeezed inwardly, as shown in Fig 13B, anticlockwise movement of the sleeve 112 results in the main cap portion being rotated in the unscrewing direction.

In this embodiment, short projections 150 are spaced circumferentially between the ribs 119 adjacent to the bottom of the skirt, opposite the top 115. These projections 150, along with the ribs 119, reduce the flexibility of the skirt, while not rigidifying the structure as much as an annular flange would do. This arrangement, instead of an annular flange, facilitates stripping of the moulding from the mould core.

It is envisaged that a simple tool may be provided, to facilitate operation by a person who finds difficulty in simultaneously squeezing and twisting the cap. The tool may be a handle having an aperture permitting the handle to be fitted over the cap to press the buttons 30,130 towards each other to engage the ribs 19,119.

It is envisaged that a tamper-evident ring could be moulded on the end of the sleeve 12,112 opposite to the cap and joined to the sleeve by frangible tags. The ring would be directly aligned with the sleeve, so that the tags are in compression and do not break, during stripping from the mould.

## Claims

1. A moulded child-resistant container cap assembly, having a cap (11;111) with a skirt (14;114) rotatably engaged in a sleeve (12;112), the skirt and the sleeve having ratchet formations permitting rotation of the cap with the sleeve in a securing direction for securing the cap on a container, but allowing the sleeve to ride over the skirt in the reverse rotational direction, squeezable acturable means (30;130) being provided to permit rotation of the cap with the sleeve in said reverse rotational direction when desired,
**characterised in that** a portion, of the sleeve (12;112) defines a tab (29;129), delineated by a gap (28;128) in the sleeve and carrying a ratchet tooth (27;127), the tab resiliently biasing the tooth into a position where it is engageable with a formation (19;119) on the skirt (14;114).

2. A cap assembly according to Claim 1, wherein the squeezable actuable means comprises opposite members (30;130), each defined by a portion of the sleeve (12;112) and delineated by a gap (31;131) in the sleeve, each member being resiliently biased out of engagement with a corresponding formation (19;119) on the skirt (14;114), but engageable with the formation on squeezing of the members towards each other.

3. A cap assembly according to Claim 2, wherein the formations engageable by the ratchet tooth (27;127) and the members (30;130) are axial ribs on the skirt (14;114).

4. A cap assembly according to claim 1, 2 or 3, wherein, the skirt (14;114) and the sleeve (12;112) have one of a groove (18;126) and a formation (26;118) engaged in the groove to resist axial separation of the sleeve and the skirt while permitting relative rotation.

5. A cap assembly according to any preceding claim, wherein the skirt (14;114) of the cap has an internal screw thread (20;120).

6. A method of making a cap assembly according to Claim 1, comprising moulding the cap (11;111) and the sleeve (12;112) simultaneously in a mould cavity at spaced positions along a core (100) of the mould, with frangible connecting means (25;125) between the cap and the sleeve, and assembling the cap and the sleeve by pushing the sleeve (12;112) into engagement with the skirt (14;114) of the cap (11,111) with breakage of the frangible connecting means (25;125), the cap (11;111) having greater resistance to being stripped from the mould core (100) than the sleeve (12;112), and the moulding being stripped from the core (100) by movement of a stripper (103) into engagement with the sleeve (12;112), so that the frangible connecting means is broken and the sleeve is pushed into engagement with the cap on the mould core (100) by the stripper (103), and the assembled article being stripped from the mould core (100) by continued movement of the stripper (103).

## Patentansprüche

1. Kindersichere, geformte Behälterverschluß-Baueinheit, die eine Kappe (11; 111) mit einer Schürze (14; 114) umfaßt, die in drehbarer Weise in einer Hülse (12; 112) in Eingriff steht, wobei die Schürze und die Hülse Sperrklinkenstrukturen umfassen, die eine Drehung der Kappe mit der Hülse in einer Befestigungsrichtung zum Befestigen der Kappe auf einem Behälter ermöglichen, es aber der Hülse erlauben, sich bei der entgegengesetzten Drehrichtung frei über die Schürze hinweg zu bewegen, sowie drückbare Betätigungseinrichtungen (30; 130), die vorgesehen sind, um eine Drehung der Kappe mit der Hülse in der entgegengesetzten Drehrichtung gewünschtenfalls zu ermöglichen,
**dadurch gekennzeichnet, daß** ein Teil der Hülse (12; 112) eine Lasche (29; 129) bildet, die von einem Spalt (28; 128) in der Hülse umgrenzt ist und einen Klinkenzahn (27; 127) trägt, wobei die Lasche den Zahn in elastischer Weise in eine Stellung vorspannt, in der er mit einer Struktur (19; 119) an der Schürze (14; 114) in Eingriff bringbar ist.

2. Verschluß-Baueinheit nach Anspruch 1, bei der die drückbaren Betätigungseinrichtungen einander gegenüberliegende Elemente (30; 130) umfassen, von denen jedes von einem Teil der Hülse (12; 112) gebildet und durch einen Spalt (31; 131) in der Hölse umgrenzt wird, wobei jedes Element in elastischer Weise außer Eingriff mit einer entsprechenden Struktur (19; 119) an der Schürze (14; 114) vorgespannt aber mit der Struktur in Eingriff bringbar ist, wenn die Elemente aufeinander zu gedrückt werden.

3. Verschluß-Baueinheit nach Anspruch 2, bei der die Strukturen, die mit dem Klinkenzahn (27; 127) und den Elementen (30; 130) in Eingriff bringbar sind, von axialen Rippen auf der Schürze (14; 114) gebildet werden.

4. Verschluß-Baueinheit nach Anspruch 1, 2 oder 3, bei der die Schürze (14; 114) und die Hülse (12; 112) jeweils entweder eine Rille (18; 126) oder eine Struktur (26; 118) aufweisen, die mit der Rille in Eingriff steht, um einer axialen Trennung der Hülse und der Schürze zu widerstehen, und dabei eine relative Drehung zuzulassen.

5. Verschluß-Baueinheit nach einem der vorhergehenden Ansprüche, bei der die Schürze (14; 114) des Verschlusses ein Innen-Schraubgewinde (20; 120) aufweist.

6. Verfahren zur Herstellung einer Verschluß-Baueinheit nach Anspruch 1, das folgende Schritte umfaßt Formen der Kappe (11; 111) und der Hülse (12; 112) gleichzeitig in einem Formhohlraum an längs eines Kerns (100) der Form in Abstand angeordneten Stellen mit brechbaren Verbindungseinrichtungen (25; 125) zwischen der Kappe und der Hülse und Zusammenbau der Kappe und der Hülse durch in Eingriff drücken der Hülse (12; 112) mit der Schürze (14; 114) der Kappe (11; 111) unter Brechen der brechbaren Verbindungseinrichtungen (25; 125), wobei die Kappe (11; 111) einen größeren Widerstand gegen ein Abstreifen vom Formkern (100) als die Hülse (12; 112) besitzt und das Formteil vom Kern (100) durch die Bewegung einer Abstreifvorrichtung (103) in Eingriff mit der Hülse (12; 112) so abgestreift wird, daß die brechbaren Verbindungseinrichtungen gebrochen werden und die Hülse durch die Abstreifvorrichtung (103) auf dem Formkern (100) in Eingriff mit der Kappe gedrückt wird, und daß der zusammengebaute Gegenstand durch eine fortgesetzte Bewegung der Abstreifvorrichtung (103) vom Formkem (100) abgestreift wird.

## Revendications

1. Ensemble de bouchon de récipient moulé, résistant aux enfants, muni d'un bouchon (11 ; 111) avec une jupe (14 ; 114) mise en prise de façon rotative dans une douille (12 ; 112), la jupe et la douille comportant des formations d'encliquetage permettant la rotation du bouchon avec la douille dans un sens de fixation pour fixer le bouchon sur un récipient, mais permettant à la douille de passer sur la jupe dans le sens de rotation inverse, des moyens (30 ; 130) actionnables pour être écrasés étant prévus pour permettre la rotation du bouchon avec la douille dans ledit sens de rotation inverse, lorsqu'on le souhaite,
**caractérisé en ce qu'**une partie de la douille (12 ; 112) définit une patte (29 ; 129), délimitée par un intervalle (28 ; 128) dans la douille et portant une dent de cliquet (27 ; 127), la patte sollicitant élastiquement la dent dans une position dans laquelle elle est susceptible d'être mise en prise avec un relief (19 ; 119) sur la jupe (14; 114).

2. Ensemble de bouchon selon la revendication 1, dans lequel les moyens actionnables pour être écrasés comprennent des organes opposés (30 ; 130) définis chacun par une partie de la douille (12 ; 112) et délimités par un intervalle (31 ; 131) dans la douille, chaque organe étant sollicité élastiquement hors de prise avec un relief (19 ; 119) correspondant sur la jupe (14 ; 114), mais étant susceptible d'être mis en prise avec le relief lors de l'écrasement des organes l'un vers l'autre.

3. Ensemble de bouchon selon la revendication 2, dans lequel les reliefs susceptibles d'être mis en prise par les dents de cliquet (27 ; 127) et les organes (30 ; 130) sont des nervures axiales sur la jupe (14; 114).

4. Ensemble de bouchon selon la revendication 1, 2 ou 3, dans lequel la jupe (14 ; 114) et la douille (12 ; 112) ont un élément parmi une gorge (18 ; 126) et un relief (26 ; 118), mis en prise dans la gorge pour résister à une séparation axiale de la douille et de la jupe, tout en permettant une rotation relative.

5. Ensemble de bouchon selon l'une quelconque des revendications précédentes, dans lequel la jupe (14; 114) du bouchon a un filetage intérieur (20 ; 120).

6. Procédé de fabrication d'un ensemble de bouchon selon la revendication 1, comprenant le moulage du bouchon (11 ; 111) et de la douille (12 ; 112) simultanément dans une cavité de moule à des positions espacées le long d'un noyau (100) du moule, des moyens de connexion (25 ; 125) fracturables étant prévus entre le bouchon et la douille, et l'assemblage du bouchon et de la douille par poussée de la douille (12 ; 112) en prise avec la jupe (14 ; 114) du bouchon (11 ; 111) avec rupture des moyens de connexion (25 ; 125) fracturables, le bouchon (11 ; 111) opposant une plus grande résistance à la séparation du noyau de moule (100) que la douille (12 ; 112) et le moulage étant enlevé du noyau (100) par un déplacement d'un racleur (103) en contact avec la douille (12 ; 112), de manière que les moyens de liaison fracturables se rompent et que la douille soit poussée en prise avec le bouchon sur le noyau de moule (100) par le racleur (103), et l'article assemblé étant enlevé du noyau de moule (100) en continuant le déplacement du racleur (103).
